# EUROPEAN PATENT SPECIFICATION

(11) **EP 3 486 218 B1**
(45) Date of publication and mention of the grant of the patent: **25.09.2024**
(21) Application number: 18206299.2
(22) Date of filing: 14.11.2018
(51) Int. Cl.: C01G 39/02, C01G 41/02

(54) **METHOD FOR THE SYNTHESIS OF METAL MOLYBDATES AND TUNGSTATES FROM MOLYBDENUM AND TUNGSTEN CARBIDES AND NITRIDES**
VERFAHREN ZUR SYNTHESE VON METALLMOLYBDATEN UND -WOLFRAMAT AUS MOLYBDÄN- UND WOLFRAMCARBIDEN UND -NITRIDEN
PROCÉDÉ DE SYNTHÈSE DE MOLYBDATES ET DE TUNGSTATES MÉTALLIQUES À PARTIR DE CARBURES ET DE NITRURES DE MOLYBDÈNE ET DE TUNGSTEN

(30) Priority: 16.11.2017 SI 201700312
(43) Date of publication of application: 22.05.2019
(73) Proprietor: Institut "Jozef Stefan", 1000 Ljubljana (SI)
(72) Inventor: MRZEL, Ales, 1000 Ljubljana (SI); VENGUST, Damjan, 1293 Smarje-Sap (SI)
(74) Representative: Jersan, Tatjana

(56) References cited:
- HASHEMPOUR M ET AL: "Chemical mechanism of precipitate formation and pH effect on the morphology and thermochemical co-precipitation of W-Cu nanocomposite powders", MATERIALS CHEMISTRY AND PHYSICS, ELSEVIER SA, SWITZERLAND, TAIWAN, REPUBLIC OF CHINA, vol. 123, no. 1, 1 September 2010 (2010-09-01), pages 83 - 90, XP027066752, ISSN: 0254-0584, [retrieved on 20100113], DOI: 10.1016/J.MATCHEMPHYS.2009.12.029
- CAVALCANTE L S ET AL: "Growth mechanism of octahedron-like BaMoO4 microcrystals processed in microwave-hydrothermal: Experimental observations and computational modeling", PARTICUOLOGY, ELSEVIER, AMSTERDAM, NL, vol. 7, no. 5, 1 October 2009 (2009-10-01), pages 353 - 362, XP026683593, ISSN: 1674-2001, [retrieved on 20090814], DOI: 10.1016/J.PARTIC.2009.05.002
- LI ZHANG ET AL: "Fabrication of Metal Molybdate Micro/Nanomaterials for Electrochemical Energy Storage", SMALL, vol. 13, no. 33, 29 June 2017 (2017-06-29), DE, pages 1700917, XP055580291, ISSN: 1613-6810, DOI: 10.1002/smll.201700917
- SEAN P. CULVER ET AL: "Low-Temperature Synthesis of AMoO 4 (A = Ca, Sr, Ba) Scheelite Nanocrystals", CHEMISTRY OF MATERIALS, vol. 25, no. 20, 4 October 2013 (2013-10-04), pages 4129 - 4134, XP055580314, ISSN: 0897-4756, DOI: 10.1021/cm402867y

## Description

The subject of the invention is a method for a synthesis of metal molybdates and metal tungstates from molybdenum and tungsten carbides and nitrides. The invention belongs to the field of inorganic chemistry and chemistry of transition metals. The invention refers to a synthesis of metal molybdates and metal tungstates form molybdenum and tungsten carbides and nitrides by using a method of conversion molybdenum and tungsten carbides and nitrides in the presence of a solution of a reactive compounds containing metal cations. This method provides for a synthesis of large amounts of metal molybdates and metal tungstates from molybdenum and tungsten carbides and nitrides.

Most synthesis of molybdates and tungstates require high temperatures and sharp reaction conditions, such as solid reactions - as described in Swanson, H. E., Morris, M. C., Stinchfield, R., Evans, E. H.: NBS. Monogr. (U.S.), 1963: 25, 24; Patherau P., Josse M., Dessapt R., Mevellec J-Y., Porcher F., Maglione M., Deniard P., Payen C.: Inorganic Chemistry, 2015: 54 (22), 10623-10631 and the salt gel method - as described in Bonanni, M., Spanhel, L., Lerch, M., Fuglein, E., Muller, G.: Chem. Mater,. 1998: 10, 304-310; Yourey J. E., Kurtz J. B., Bartlett B. M.: Inorganic Chemistry, 2012: 51(19), 10394-10401. Metal tungstates and molybdates have also been synthesized under more mild synthetic conditions through various chemical pathways, such as those of polymer-controlled crystallization- as described in Yu, S. H., Antonietti, M., Cölfen, H., Giersig, M.: Angew. Chem., Int. Ed., 2002: 41, 2356-2360, a reversed micelle templating method -as described in Kwan, S., Kim, F., Akana, J., Yang, P. D.: Chem. Commun., 2001: 5, 447-448; Shi, H. T., Wang, X. H., Zhao, N. N., Qi, LM, Ma, J. M.: J. Phys. Chem. B, 2006: 110, 748-753, with hydrothermal synthesis - as described in Yu, S. H., Liu, B., Mo, M. S., Huang, J. H., Liu, X. M., Qian, Y. T.: Adv. Funct. Mater., 2003: 13, 639-647:Cui, X. J., Yu, S. H., Li, L. L., Liu, H. B., Mo, M. S., Liu, X. M.: Chem.- Eur. J., 2004: 10, 218-223; Ding, Y., Yu, S. H., Liu, C., Zang, Z. A.: Chem.-Eur. J., 2007: 13, 746-753; Zhang, Q., Yao, W. T., Chen, X. Y., Zhu, L. W., Fu, Y. B., Zhang, G. B., Yu., S. H.: Cryst. Growth Des., 2007: 7, 1423-1431; Ding Y., Wan Y, Min Y. L., Zhang W., Yu S-G.: Inorganic Chemistry, 2008: 47 (17), 7813-7823, with coprecipitation methods - as described in Ramezani M., Hosseinpour-Mashkani S. M., Sobhani-Nasab A., Ghasemi H. Estarki : J. Mater. Sci. Mater. Electron. 2015: 26, 7588; Hashempour M., Razavizadeh H., Rezaie H-R., Hashempour M., Ardestani M.: Mater. Chem. Phys.,123, 2010 : 83-90; Cavalcante I.S., Sczancoski J.C., Tranquilin R.L.,Varela J.A., Omaghi Orlandi E.L.: Particuology 2009: M. 7, I 5, 353-362, with mechanical-chemical synthesis of metal oxides - as described in Janbua W., Bongkarn T., Vittayakorn W., Vittayakorn N. : Ceramics International, 2017 : S435-S443, with the vapor diffusion sol-gel method resulting AMoO₄ (A = Ca, Sr, Ba) - as described in Culver S. P., Rabuffetti F, A., Zhou S., Mecklenburg M., Song Y.,. Melot B. C, Brutchey R. L. : Chemistry of Materials 2013: 25 (20), 4129-4134. Metal molybdate catalytic particles Fe₂(MoO₄)₃/MoO₃ are formed by mixing Fe₂O₃ and MoOs particles during the oxidation of methanol in the reactor - as described in US Patent 6331503 B1. For the synthesis of PbMoO₄ and PbWO₄, a number of techniques have been used, such as chemical precipitation - as described by Anandakumar V. M., Khadar M. A.: Phys. Status Solidi A, 2008:205, 2666-2672 ; Hernández-Uresti D. B., Martínez-de la Cruz A., Torres-Martinez L.: Res. Chem. Intermed., 2012: 38, 817-828; Chu H., Li X,. Chen G,Jin Z,. Zhang Y., Li Y.: Nano Res.,2008:1, 213-220; Patent US 4366126A ;Chu H., Li X., Chen G., Jin Z., Zhang Y., Li Y.: Nano Res., 2008: 1, 213-220, hydrothermal reactions - as described in Sczancoski J. C, Bomio, M. D. R., Cavalcante L.S., Joya M. R., Pizani P.S., Varela J. A., Longo E., Siu M. L., Andrés J.A.: The Journal of Physical Chemistry C, 2009:113(14), 5812-5822; Shen M., Zhang X., Dai K., Chen H.,. Peng T.: CrystEngComm, 2013: 15, 1146-1152; Sczancoski J. C., Bomio M. D. R, Cavalcante L. S., Joya M. R., Pizani P. S., Varela J. A., Longo E., Li M. S., Andrés J. A.: J. Phys. Chem. C, 2009: 113, 5812-5822, synthesis using ultrasound -as described in Phuruangrat A., Phillips S., Varela J.A., Longo E, Siu Li M., Andrés J.A.:The Journal of Physical Chemistry C, 2009: 113 (14), 5812-5822; Phuruangrat, T. Thongtem S.: Curr. Appl. Phys., 2010: 10, 342-345; Thongtem T., Thongtem S.: Curr. Appl. Phys., 2010: 10, 342-345, solid reactions - as described in Neiman A.Y., Guseva A.F., Sharafutdinov A.R.: Solid State Ionics, 1997: 101-103, 367-372, Czochralski Crystal Growth Process- as described in Takano S., Esashi S., Mori K, Namikata T.: J. Cryst. Growth, 1974: 24-25, 437-440; Zeng H.C.: Journal of Crystal Growth., 1996: 160, 119-128, by combustion of MoOs and Pb(NO₃)₂ as starting materials- as described in Vidya S., Thomas J. K: IOP Conf. Ser.: Mater. Sci. Eng.,: 2015, 73, 012120, , with microwaves - as described in Kwolek P., Tokarski T., 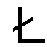 okcik T., Szaci 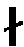 owski K.: *Arch Metall Mater.*, 2013: 58, 217-222; Phuruangrat A, Thongtem T, Thongtem S.: J. Cryst Growth, 2009: 311, 4076-4081.

PbMoO₄ nanoparticles were prepared from lead nitrate and a water suspension of MoOs nanoparticles - as described in Perkins C. K., Barber K. N., Apblett A. W.:CrystEngComm, 2014: 16, 2869-2873. Monocrystals of lead molybdate were synthesized by heating solid, insoluble lead salts, solid, insoluble ammonium molybdate and water. The synthesis process comprises mixing, heating, separating the solid liquid, drying and roasting, whereby pure lead molybdate is obtained - as described in Patent CN 102010006 B. Monocrystals PbWO₄ were prepared by the modified Bridgman method - as described in Patents ZL94 1 14075 and ZL2005100297447. Solid nanoporous WOs material reacts with lead in water and forms insoluble PbWO₄ - as described in Perkins C.K., Reed, T.M., Brown, Z.A. Apblett A.W.: Enivomental Science-Water Research & Technology, 2017: 3, 3, 429-432.Metal molybdate compounds MMoO₄ (M = Co, Zn, Mn, Fe, Ni etc ), obtained by different approaches - as described in Zhang L., Zheng S., Wang L., Tang H., Xue H, Wang G., Pang H.: Small 2017: 1700917 have proven to be remarkable materials in various fields. Metal tungstates (MWO₄), functional materials with a high potential for a diverse set of applications ranging from low-dimensional magnetism to chemical sensing and photoelectrocatalytic water oxidation, are synthesised with different synthetic strategies - as decribed in Denk M., Kuhness D., Wagner M., Surnev S., Negreiros F. R., Sementa L., Barcaro G., Vobornik I., Fortunelli A., Netzer F. P.: ACS Nano 2014: 8 (4), 3947-3954.

Several different techniques and ways of synthesising metal molybdates and metal tungstates are known, but no process for the synthesis of metal molybdates and metal tungstates from molybdenum and tungsten carbides and molybdenum and tungsten nitrides in the presence of a solution of metal-containing reactive compounds has been described yet. The task and goal of the invention is a synthesis that will allow a synthesis of large amounts of metal molybdates and tungstates. According to the invention, the task is solved by a process for the synthesis of macroscopic quantities of metal molybdates and tungstates from molybdenum and tungsten carbides and nitrides according to independent claims.

### Description of the Invention

The invention will be described by embodiments and figures.

The figures show:

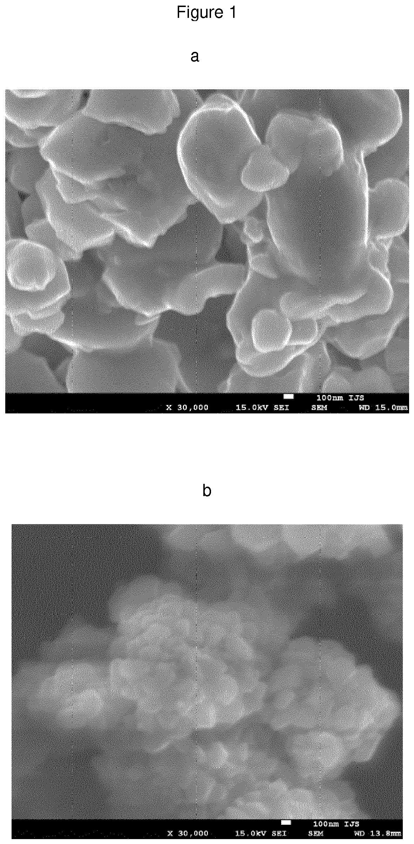

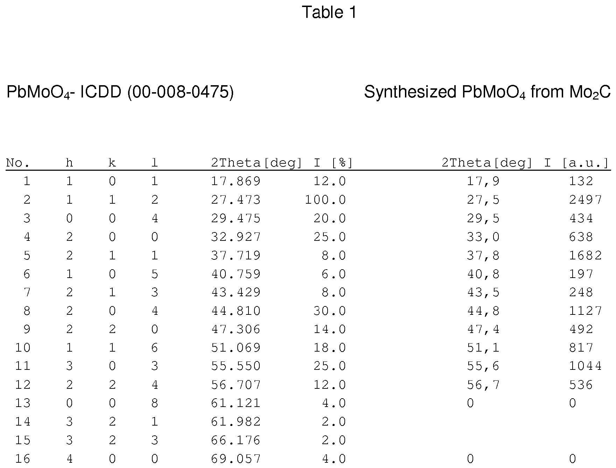

Fig. 1: a) Image of the starting material Mo₂C (Aldrich) applied to the carbon strip; and b) the resulting PbMoO₄ crystals applied to the carbon ribbon were taken with a linear electron microscope onto a field emission

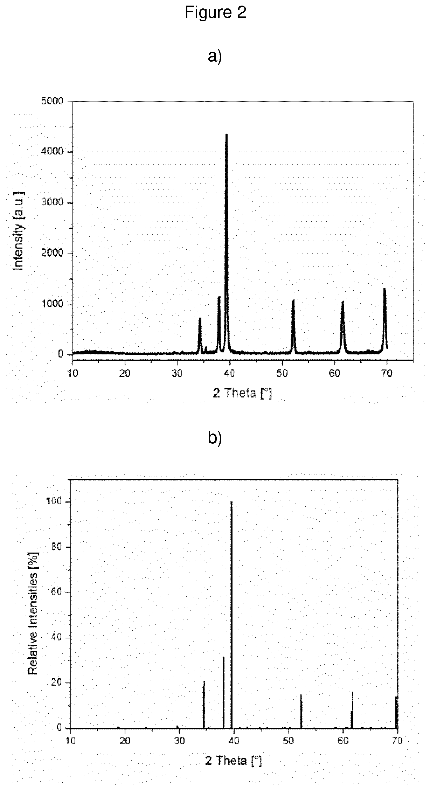

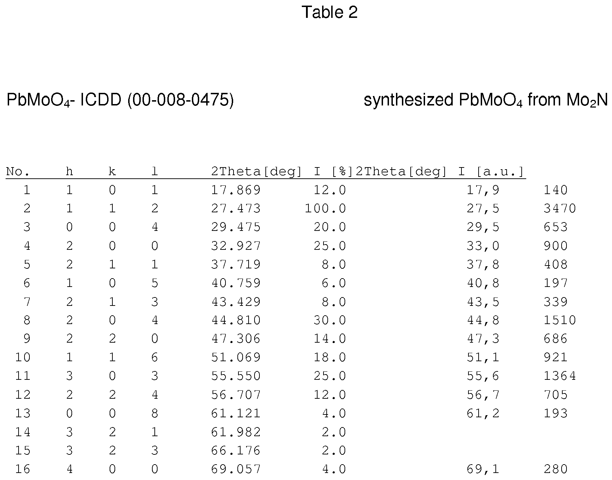

Fig. 2: a) X-ray diffraction recording of the starting material Mo₂C (Aldrich); and b) the Mo₂C X-ray spectrum from the International Center for Diffraction Data ICDD 01-077-0720;

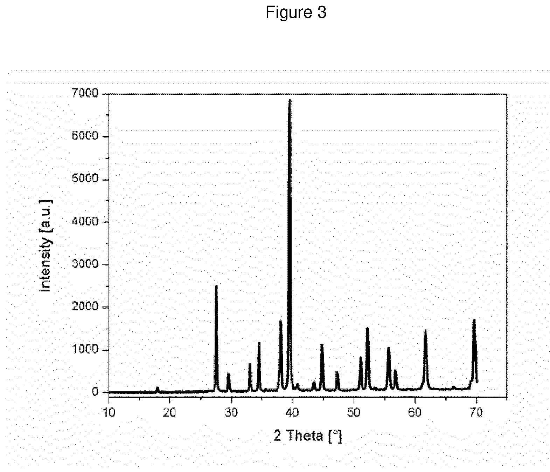

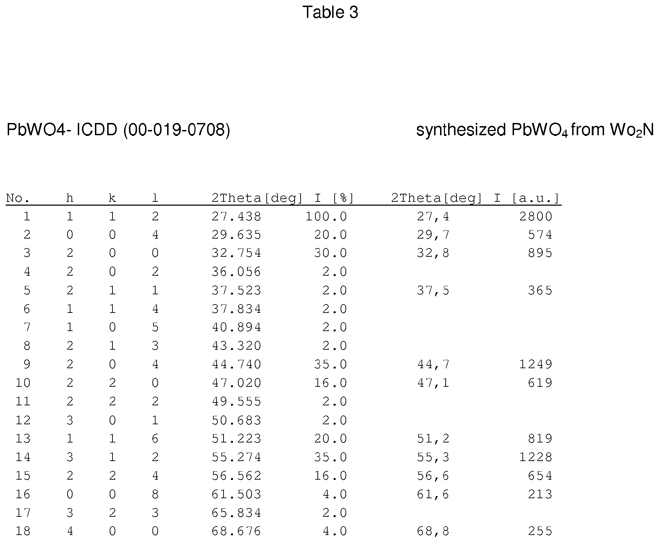

Fig. 3: a) X-ray diffraction pattern of the resulting PbMoO₄ crystals from the initial Mo₂C material (Aldrich);
Table 1: Comparison of the obtained x-ray image of the resulting PbMoO₄ from the Mo₂C (Aldrich) and PbMoO₄ crystals from the database, which is attached and certified in the EVA program;

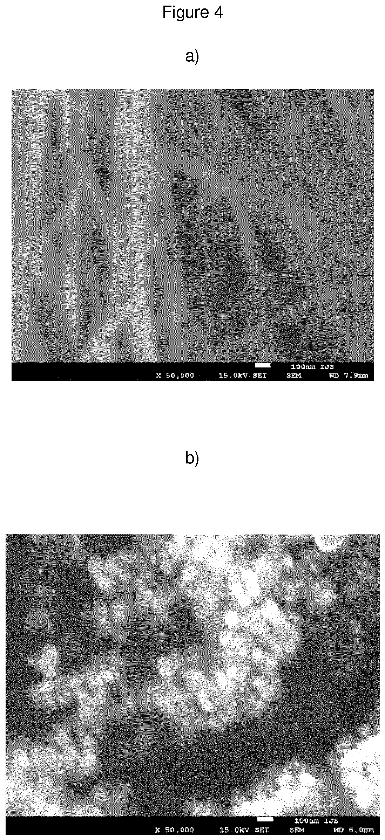

Fig. 4: a) Image of the starting material Mo₂N in the form of nanowires applied to the carbon strip; and b) the resulting PbMoO₄ crystals applied to the carbon strip taken with a linear electron microscope to a field emission;

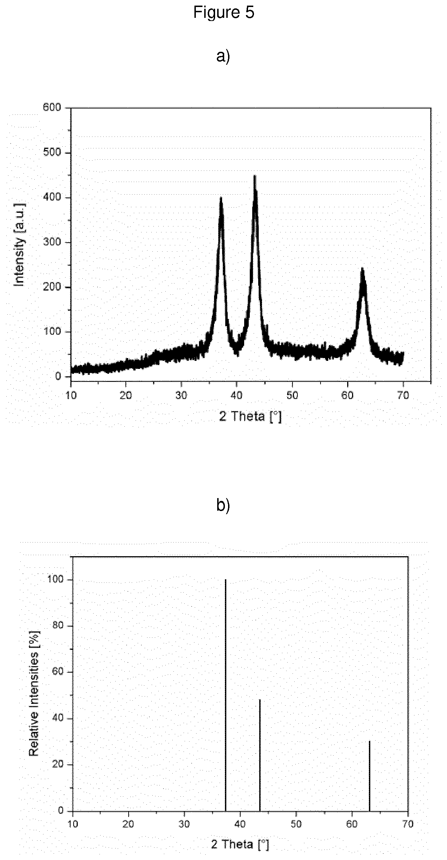

Fig. 5: a) X-ray diffraction overlay of Mo₂N nanowires and b) X-ray spectrum Mo₂N from the International Center for Diffraction Data Mo₂N ICDD (00-025-1366);

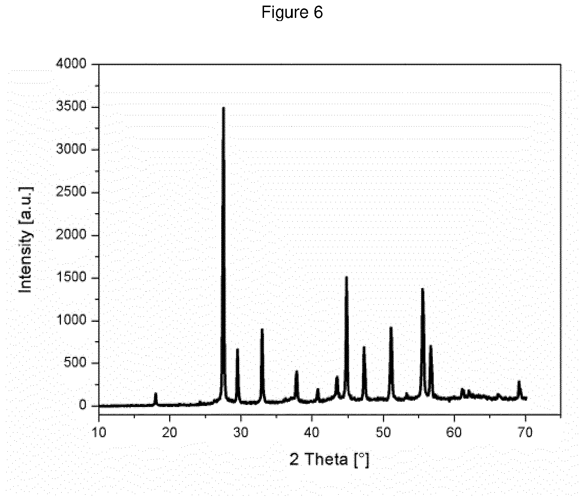

Fig. 6: X-ray diffraction pattern of the resulting PbMoO₄ crystals from the initial Mo₂N material;
Table 2: Comparison of the obtained X-ray spectrum of the resulting PbMoO₄ crystals from Mo₂N and PbMoO₄ from the database, which is attached and certified in the EVA program;

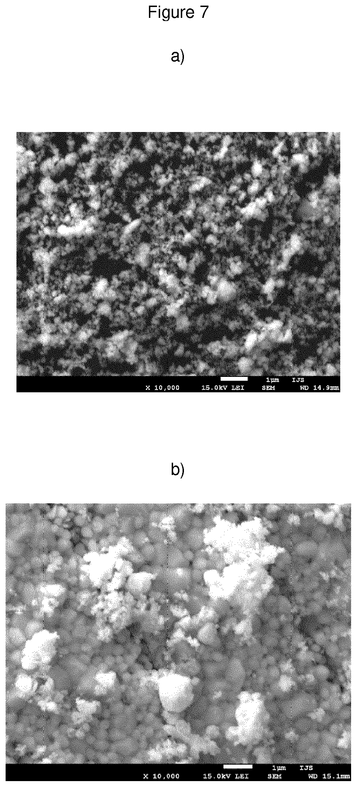

Fig. 7: a) Image of the starting material W₂N applied to the carbon strip; and b) the resulting PbWO₄ crystals applied to the carbon tape taken with a linear electron microscope on a field emission;

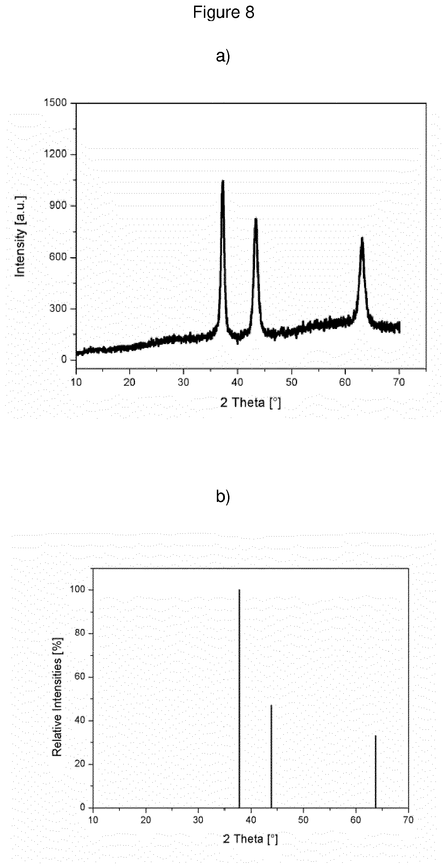

Fig. 8: a) X-ray diffraction image of the initial material W₂N; and b) X-ray X-ray spectrum from the International Center for Diffraction Data W₂N ICDD (00-025-1257);

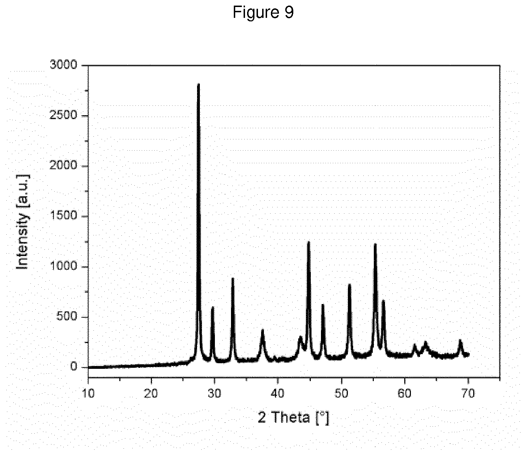

Fig. 9: X-ray diffraction pattern of the resulting PbWO₄ crystals from the initial material W₂N;

Table 3: Comparison of the obtained X-ray image of the resulting PbWO₄ crystals from W₂N from the database, which is attached and certified in the EVA program

The described technical problem is solved by the chemical conversion of molybdenum and tungsten nitrides MₓN, where M =Mo,W and 1 ≤ x ≤ 2 and molybdenum and tungsten carbides MₓC, where M = Mo,W and 1≤x≤2. Chemical conversion into metal molybdates and metal tungstates in a form AₐMO₄, where A = Sr, Ba, Co, Bi, Cd, Cu, Fe, Mn, Pb and 0.6 ≤ a ≤ 1, M = Mo, W takes place in a solution of reactive compounds, containing metal A = Sr, Ba, Co, Bi, Cd, Cu, Fe, Mn, Pb. Solvent in which said reactive compounds containing metal selected from Sr, Ba, Co, Bi, Cd, Cu, Fe, Mn, Pb are dissolved is water or a mixture of solvents consisting of at least 0.5 % by weight of water, the remainder of the solvents being liquids (e.g. alcohols) that are mixed with water. Reactive compounds containing metals A = Sr, Ba, Co, Bi, Cd, Cu, Fe, Mn, Pb are preferably nitrates, oxides, acetates and halides. The reaction is also carried out with insoluble reactive compounds containing metal A = Sr, Ba, Co, Bi, Cd, Co, Cu, Fe, Mn, Pb. Conversion takes place at temperatures above 1 °C, preferably at temperatures between 20 °C and 300 °C. The reaction also takes place under conditions of solvatothermal reaction in autoclaves. The starting materials are molybdenum and tungsten nitrides MₓN, where M = Mo, W and 1 ≤ x ≤ 2 and molybdenum and tungsten carbides MₓC, where M = Mo, W and 1 ≤ x ≤ 2, wherein said molybdenum and tungsten nitrides MₓN and molybdenum and tungsten carbides MₓC are, with reactive compounds containing metal A = Sr, Ba, Co, Bi, Cd, Cu, Fe, Mn, Pb, converted to metal molybdates or metal tungstates.

### Embodiments

1. Implementation example describes the synthesis of lead molybdate P PbMoO₄ with the chemical conversion of molybdenum carbide Mo₂C (Aldrich).
   202 mg of molybdenum carbide Mo₂C (Aldrich).was poured with 100 ml of distilled water and dispersed for 15 minutes using an ultrasonic bath. 500 mg of Pb(NO₃)₂ was dissolved at room temperature in 100 ml of distilled water and added to the Mo₂C dispersion and heated to 50 °C for 12 hours. The dispersion was then centrifuged for 30 minutes at 2500 rpm and the product was washed three times with distilled water, once with isopropanol, and dried at 50 °C in an oven. We received 220 mg of material. The material was examined by linear electron microscopy (SEM), by electron microscopy (TEM) and X-ray powder diffraction.
2. Implementation example describes the synthesis of lead molybdate PbMoO₄ with the chemical conversion of molybdenum nitride Mo₂N
   30 mg of molybdenum nitride Mo₂N in the form of nanowires was poured with 60 ml of distilled water and dispersed for 15 minutes using an ultrasonic bath. 500 mg Pb(NO₃)₂ was dissolved at room temperature in 100 ml of distilled water, 30 ml of this solution was added to the Mo₂N dispersion at room temperature (20 °C) with stirring on a magnetic stirrer. The resulting dispersion was centrifuged for 30 minutes at 10000 rpm and the resulting insoluble product was washed three times with distilled water with isopropanol once and dried at 50 °C in an oven. The mass of the final material was 62 mg. The material was examined by linear electron microscopy (SEM), by electron microscopy (TEM) and X-ray powder diffraction.
3. The Implementation example the synthesis of lead tungsten PbWO₄ with the chemical conversion of tungsten nitride W₂N
   930 mg WOs (Aldrich) was heated at 630 °C for 4 hours with a mixture of argon and ammonia gas (flow rate of 10 ml/min to 30 ml/min). We obtained 785 mg of tungsten nitride W₂N. 80 mg of this material was dispersed in 60 ml of water. 500 mg of Pb(NO₃)₂ was dissolved at room temperature in 100 ml of distilled water, 50 ml of this solution was added to the W₂N dispersion. The dispersion was heated at 50 °C for 12 hours. The dispersion was centrifuged for 30 minutes at 2400 rpm and the product was washed three times with distilled and once with isopropanol and dried at 50 °C in an oven. The weight of the final material was 125 mg. The material was examined by linear electron microscopy (SEM), by electron microscopy (TEM) and X-ray powder diffraction.

## Claims

1. A process for the synthesis of metal molybdates and tungstates in the form of AₐMO₄, wherein A = Sr, Ba, Co, Bi, Cd, Cu, Fe, Mn, Pb, wherein 0.6 ≤ a ≤ 1, M = Mo, W, **characterized in that** the synthesis is carried out by the chemical conversion of molybdenum and tungsten nitrides MₓN, wherein M = Mo, W and 1 ≤ x ≤ 2, and molybdenum and tungsten carbides MₓC, wherein M = Mo, W and 1 ≤ x ≤ 2 in a solution of reactive compounds containing metal A = Sr, Ba, Bi, Cd, Co, Cu, Fe, Mn, Pb, wherein a solvent, in which said reactive compounds containing metal A = Sr, Ba, Bi, Cd, Co, Cu, Fe, Mn, Pb are dissolved, is water or a mixture of solvents consisting of at least 0.5 weight % of water and the remainder of the solvents are liquids that are miscible with water, at temperatures above 1 °C.

2. The process according to claim 1, **characterized in that** reactive compounds containing metal A = Sr, Ba, Co, Bi, Cd, Cu, Fe, Mn, Pb are nitrates, acetates, oxides or halides.

3. The process according to claim 1, **characterized in that** the chemical conversion is carried out at temperatures between 20 °C and 300 °C.

## Patentansprüche

1. Verfahren zur Synthese von Metall-Molybdaten und -Wolframaten in Form von AₐMO₄, wobei A = Sr, Ba, Co, Bi, Cd, Cu, Fe, Mn, Pb, wobei 0,6 ≤ a ≤ 1, M = Mo, W, **dadurch gekennzeichnet, dass** die Synthese durch chemische Umwandlung von Molybdän- und Wolframnitriden MₓN durchgeführt wird, wobei M = Mo, W und 1 ≤ x ≤ 2 und Molybdän- und Wolframcarbide MₓC, wobei M = Mo, W und 1 ≤ x ≤ 2 in einer Lösung von reaktiven Verbindungen, die Metall A = Sr, Ba, Bi, Cd, Co, Cu, Fe, Mn, Pb enthalten, wobei das Lösungsmittel, in dem die reaktiven Verbindungen, die Metall A = Sr, Ba, Bi, Cd, Co, Cu, Fe, Mn, Pb enthalten, gelöst sind, Wasser oder eine Mischung von Lösungsmitteln ist, die aus mindestens 0,5 Gew.-% Wasser besteht, und der Rest der Lösungsmittel die bei Temperaturen oberhalb von 1 °C mit Wasser mischbare Flüssigkeiten sind.

2. Verfahren nach Anspruch 1, **dadurch gekennzeichnet, dass** die reaktiven Verbindungen, die Metall A = Sr, Ba, Co, Bi, Cd, Cu, Fe, Mn, Pb enthalten, Nitrate, Acetate, Oxide oder Halide sind.

3. Verfahren nach Anspruch 1, **dadurch gekennzeichnet, dass** die chemische Umwandlung bei Temperaturen zwischen 20°C und 300°C durchgeführt wird.

## Revendications

1. Procédé de synthèse de molybdates et de tungstates de métal sous la forme de AₐMO₄, dans lequel A = Sr, Ba, Co, Bi, Cd, Cu, Fe, Mn, Pb, dans lequel 0,6 ≤ a ≤ 1, M = Mo, W, **caractérisé en ce que** la synthèse est réalisée par la conversion chimique de nitrures de molybdène et de tungstène MₓN où M = Mo, W et 1 ≤ x ≤ 2, et de carbures de molybdène et de tungstène MₓC, dans laquelle M = Mo, W et 1 ≤ x ≤ 2 avec des solutions de composés réactifs contenant le métal A = Sr, Ba, Bi, Cd, Co, Cu, Fe, Mn, Pb, dans lequel le solvant, dans lequel les composés réactifs contenant le métal A = Sr, Ba, Bi, Cd, Co, Cu, Fe, Mn, Pb sont dissous, est l'eau ou un mélange de solvants contenant au moins 0,5 % en poids d'eau, le reste des solvants sont des liquides miscibles à l'eau, à des températures supérieures à 1°C.

2. Procédé selon la revendication 1, **caractérisé en ce que** les composés réactifs contenant le métal A = Sr, Ba, Co, Bi, Cd, Cu, Fe, Mn, Pb sont des nitrates, des acétates, des oxydes ou des halogénures.

3. Procédé selon la revendication 1, **caractérisé en ce que** la conversion chimique est réalisée à des températures (comprises) entre 20°C et 300°C.
